# EUROPEAN PATENT SPECIFICATION

(11) **EP 3 900 303 B1**
(45) Date of publication and mention of the grant of the patent: **16.11.2022**
(21) Application number: 19829248.4
(22) Date of filing: 30.12.2019
(51) Int. Cl.: H04L 67/10, H04L 67/60, H04L 43/10

(54) **METHOD, APPARATUS AND COMPUTER PROGRAM PRODUCT FOR ORCHESTRATING DISTRIBUTED TASK COMPLETION IN A COMMUNICATION NETWORK**
VERFAHREN, VORICHTUNG UND COMPUTER PROGRAM PRODUKT ZUR KOORDINIERUNG DER DURCHFÜHRUNG VERTEILTER AUFGABEN IN EINEM KOMMUNIKATIONSNETZ
PROCÉDÉ, DISPOSITIF ET PRODUIT PROGRAMME D'ORDINATEUR POUR L'ORGANISATION DE LA RÉALISATION DE TÂCHES DISTRIBUÉES DANS UN RÉSEAU DE COMMUNICATION

(30) Priority: 21.12.2018 LU 101070
(43) Date of publication of application: 27.10.2021
(73) Proprietor: Luxembourg Institute of Science and Technology (LIST), 4362 Esch-sur-Alzette (LU)
(72) Inventor: GUERLAIN, Cindy, 2423 Luxembourg (LU)
(74) Representative: Wagner, Jean-Paul
(86) International application number: PCT/EP2019/087159
(87) International publication number: WO 2020/128110

(56) References cited:
- EP-A1- 3 073 732
- US-A1- 2011 209 153
- US-A1- 2012 246 214

## Description

### Technical field

The present invention lies in the field of communication systems. In particular, it relates to communication system in which a plurality of nodes completes a distributed data-driven task.

### Background of the invention

The coordination of a variety of distributed tasks in a communication network is a largely data driven operation. As an example, clearing a financial transaction is a task in which several actors, i.e., an entity ordering a transaction, a clearing house, a financial institution such as a bank, or a beneficiary entity, or rather computing devices associated with these entities, each perform sub-tasks. Each sub-task relies on data describing the parameters of the transaction: verifying identities, linking identities to accounts, checking balances. Another example lies in the area of logistics. Providers in a logistics chain comprise an originator, parcel delivery services, a postal network and the like. While physical packets are the object of a logistic task, the completion of the physical routing of a packet relies essentially on the completion of another distributed task: the provision of data that drives the packet along the chain. This distributed task is performed by computing devices associated with each of the aforementioned logistics providers, which nowadays tend to be interlinked and provide automated performance of the task.

The data on which such distributed tasks or transactions rely is often privacy sensitive data describing the identity and behaviour of users that have initiated the transaction, or which are the target of the transaction. The data may for example indicate that John S. of T transfers an amount of X Euros to a person living in D, living at a specific address. Coming back to the logistics example, the data may for example indicate that Joan Z. of K has ordered X parcels containing specified goods using a credit card, and that she is or is not at home at specified times during the coming week to accept parcel delivery. In known scenarios, any data that is required by any of the providers that participate in the completion of the distributed task, is available as bulk data to all of the providers. For the user whose behaviour or identity is described, it becomes increasingly difficult to trace which provider stores and uses the gathered personal information, and wo which aims, either with or without the user's explicit consent. The bulk data ends up being available at data warehouses of multiple providers.

Prior art document EP3073732 A1 discloses the distribution of plurality of video processing tasks to plurality of processing devices of a computer network in an economical way.

However, nowadays data security breaches multiply, wherein dishonest individuals or groups gain unauthorized access to data digitally held by commercial service providers. For the users described by the stolen data, the risk of digital identity theft, unauthorized credit card use, and other illegal use of their data is therefore increased. Although automation of data driven tasks in a setting relying heavily on data communication networks is practical, it also implies risks relating to the security of the data that transits on these networks, and that is potentially stored at nodes in the networks.

### Technical problem to be solved

It is an objective to present method and device, which overcome at least some of the disadvantages of the prior art.

### Summary of the invention

In accordance with a first aspect of the invention, a method for orchestrating the distributed completion of a task in a communication network is provided. A plurality of nodes in said network contribute to the completion of said task by completing a set of sub-tasks thereof. The completion of each sub-task requires data initially held by an orchestration node. The method comprises the following steps for each sub-task:
a) at the orchestration node, using selection means, selecting a node for completing a set of sub-tasks, from a set of candidate nodes;
b) using data transmission means, instructing the selected node to complete said set of sub-tasks and transmitting only the data required to complete said sub-task to the selected node.

In accordance with an aspect of the invention, a method for orchestrating the distributed completion of a common task in a communication network is proposed. The completion of said common task relies on privacy sensitive data of a user. A plurality of nodes in said network contribute to the completion of said common task by completing a set of sub-tasks thereof, and the completion of each sub-task requires a subset of the privacy sensitive data initially held by an orchestration node. The method comprising the following steps for each sub-task:
aa) at the orchestration node, using selection means, selecting a node for completing a set of sub-tasks, from a set of candidate nodes;
bb) using data transmission means, instructing the selected node to complete said set of sub-tasks and transmitting only the subset of data required to complete said sub-task to the selected node.

Preferably, the orchestrating node may comprise a memory element in which pieces of data are associated with predetermined sub-tasks. Preferably, the data may be associated to sub-tasks based on user input. The user input may preferably be provided to the orchestrating node using a webbased user interface.

Said set of sub-tasks may preferably be a singleton set. Alternatively, the set of sub-tasks may comprise a plurality of sub-tasks.

Preferably, the selection step a) may further comprise the steps of:
- transmitting a probing request to at least part of said candidate nodes using data transmission means;
- receiving a probing reply from said candidate nodes at the orchestration node;
- using data processing means, grading the candidate nodes based on their probing replies using a predetermined grading metric, and
- selecting the candidate node having transmitted the probing reply that achieves the highest grade for completing said sub-task.

Preferably, said probing request may comprise part of the data required to complete said sub-task.

Said grading metric may preferably comprise any of a metric for grading the responsiveness, the availability or the trustworthiness of said candidate nodes, or any combination thereof.

The completion of a sub-task may preferably be required to take place in a predetermined location, and the grading metric may preferably comprise an indication of the proximity between said predetermined location and the location or geographical position of a candidate node.

Preferably, said orchestrating node may detect, using data processing means, common sub-tasks for at least two different tasks, and a common node may preferably be selected for the completion of the corresponding sub-tasks of the two tasks.

Each sub-task may preferably comprise a sequence of actions to be performed, and the orchestrating node may progressively transmit the data required to perform each action as completion of the subtask progresses.

The state of completion of an action may preferably be notified to the orchestrating node.

Subject to a negative notification of the completion of an action, the orchestrating node may preferably iterate step a) and b) to select a new node for completing said sub-task.

The selection of said node may preferably depend on information indicative of the reliability of said node.

Preferably, said information may comprise an indication of the trustworthiness of said node.

The completion of a second subtask may preferably depend on the completion of a first subtask, and the set of candidate nodes or completing the second subtask may preferably depend on the node that was selected to complete the first subtask.

The state of completion of a subtask may preferably be notified to the orchestrating node by the selected node.

Preferably, the completion of a subtask may be notified to the orchestrating node using a data communication channel connecting the selected node to the orchestrating node.

The completion of a subtask may preferably be recorded in a distributed ledger in the communication network. The distributed ledger may preferably comprise a blockchain. The blockchain may comprise a potentially continuously growing list of records, called blocks, which are linked and secured using application of cryptographic algorithms. Each block may typically contain a hash pointer as a link to a previous block, a timestamp and transaction data. Copies of the blockchain may be stored on a plurality of nodes, which perform a distributed consensus algorithm for validating any new transaction data that is added to the blockchain.

Said nodes may preferably comprise mobile nodes. The mobile nodes may preferably comprise a tablet computer or a smartphone.

Preferably, the set of sub-tasks required for the completion of said tasks may change as the completion of the task proceeds. The set of sub-tasks may be changed by a user who determines which sub-tasks need to be performed. Alternatively, the orchestration node may adapt the set of sub-tasks depending on the successful or unsuccessful completion of a sub-task, in order to eventually achieve completion of the task.

Said task may preferably comprise sub-task relating to the delivery of a physical packet from a source address to a destination address, and said candidate nodes may preferably be associated with logistics service providers.

Preferably, the data held by an orchestration node may comprise the packet's destination address, opening hours at the destination address, a preferred delivery time, or any other personal information related to the completion of the task.

The selection of a node may preferably on the node's proximity to said destination address at said preferred delivery time.

Preferably, steps a) and b) may be repeated until all sub-tasks of the task have been completed.

In accordance with another aspect of the invention, a device for orchestrating the distributed completion of a task in a communication network is provided. A plurality of nodes in said network contribute to the completion of said task by completing a set of sub-tasks thereof. The completion of each sub-task requires data initially held in a memory element of the device. The device comprises data processing means and data transmission means, and the data processing means are configured to:
- select a node for completing a set of sub-tasks, from a set of candidate nodes;
- transmit instructions to the selected node to complete said set of sub-tasks and transmit only the data required to complete said sub-task to the selected node.

In accordance with an aspect of the invention, a device for orchestrating the distributed completion of a common task in a communication network is provided. The completion of said common task relies on privacy sensitive data of a user. A plurality of nodes in said network contribute to the completion of said common task by completing a set of sub-tasks thereof, and the completion of each sub-task requires a subset of the privacy sensitive data initially held in a memory element of the device. The device comprises data processing means and data transmission means, wherein the data processing means are configured to:
- select a node for completing a set of sub-tasks, from a set of candidate nodes;
- transmit instructions to the selected node to complete said set of sub-tasks and transmit only the subset of data required to complete said sub-task to the selected node.

Preferably, the data processing means may further be configured for performing the method in accordance with other aspects of the invention.

In accordance with a further aspect of the invention, a computer program comprising computer readable code means is provided, which, when run on a computer, causes the computer to carry out the method in accordance with aspects of the invention.

According to yet another aspect of the invention, a computer program product is provided, comprising a computer-readable medium on which the computer program according aspects of the invention is stored.

The invention provides a method in which an orchestrating node in a communication network, which may for example be a node holding personal privacy sensitive data of a user, selectively transmits portions of said data to other nodes in the communication network, so that these nodes complete a distributed data driven task. Each of these other nodes is selected based on a set of criteria, such as availability, prior performance reliability, level of security/encryption the communication channel that is used to connect to the node, or overall trustworthiness. A selected node is instructed by the orchestrating node to complete a sub-task of the task at hand. The orchestrating node coordinates the distributed performance of the task and maintains control over the data that is transmitted to any of the participating network nodes. In particular, only pieces of information that are necessary for the completion of a sub-task are entrusted to the node selected for the completion of the subtask. While the data driven task completion method in accordance with aspect of the invention will find use in many applications, it is of particular use in the data distribution that underlies a logistics delivery chain. In known methods, the data that relates to the distribution of a packet or parcel is often transmitted in bulk to any of the providers involves in the distribution chains, which makes the storage and use of user critical data hard to trace. By selecting to which nodes to entrust with data at which point in time during the completion of the task, and by transmitting only the pieces of data that are relevant for the completion of a subtask to a selected node, the method reduces the amount of sensitive information that transits on the communication network, while still providing all the data that is required to complete the task. This reduces the exposure of privacy sensitive data when a data breach occurs at any of the entrusted nodes. The approach further reduces the amount of privacy sensitive data that would be available to a third party successfully eavesdropping on a communication channel that connects the orchestrating node to a selected node, as the complete data is rarely transmitted. In preferred embodiments wherein the user to which the data belongs controls the orchestrating node, the quality of service and flexibility is increase as compared to known logistics data distribution methods. For example, a node managing the las hop delivery of a packet may only be selected when the node is close to a parcel's destination, which may be changed up until that point in time.

### Brief description of the drawings

Several embodiments of the present invention are illustrated by way of figures, which do not limit the scope of the invention, wherein:
- figure 1 is a workflow illustrating the main steps according to a preferred embodiment of the method in accordance with the invention;
- figure 2 illustrates an example of a system in which a preferred embodiment of the method in accordance with the invention is applicable;
- figure 3 illustrates an example of a system in which a preferred embodiment of the method in accordance with the invention is applicable.

### Detailed description of the invention

This section describes aspects of the invention in further detail based on preferred embodiments and on the figures. The figures do not limit the scope of the invention. Throughout the description, like numerals will be used to describe like concepts in different embodiments. For example, numerals 100, 200 each refer to an orchestrating node in accordance with an aspect of the invention. Details that are described in the context of a particular embodiment are applicable to other embodiments, unless otherwise stated.

Throughout the description, the word "node" is used in the context of a communication system to describe any computing device that is equipped with a wired or wireless networking interface. Examples of a node include but are not limited to a Personal Computer, PC, a laptop computer, a smartphone, a tablet computer, a smart watch, smart Internet of Things, IoT, objects and the like. A node runs an operating system and has access to an information storage system, such as a file system or a structured database. A node may further comprise at least one data processor operatively connected to a memory element, such as a Random-Access Memory, RAM, element, a hard disk drive and/or a Solid-State Drive, SSD, and to a structured data repository, which may for example be implemented by a Structured Query Language, SQL, database residing on the hard disk drive or the SSD. Nodes are interconnected via wired or wireless data communication channels, often using multiple intermediary routing nodes.

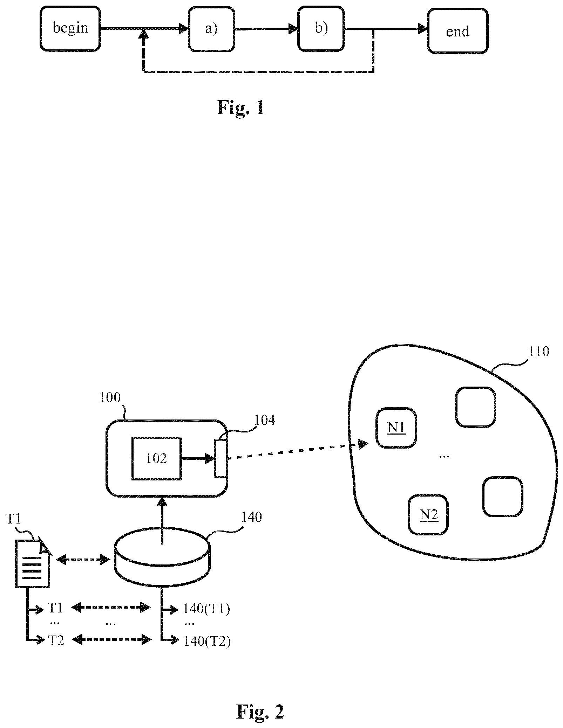

Figure 1 illustrates the main steps of a preferred embodiment of the method according to the invention. The method provides orchestration for the distributed completion of a common task in a communication network. A plurality of nodes that are connected through the network to the orchestrating node, contribute to the completion of said task by completing a set of sub-tasks. The set of sub-tasks may comprise a single sub-task or a plurality of sub-tasks. Sub-tasks may be sequentially dependent on one another, so that a second sub-task may only be started when a first sub-task on completion of which the second task is dependent has been completed. Alternatively, sub-tasks may not be dependent on one another so that they may be completed in parallel. The completion of each sub-task requires data initially held by the orchestration node.

The orchestration node comprises a data processor programmed to implement selection means for selecting a node for the completion of a sub-task among a set of candidate nodes. It further comprises a memory element to which the data processor has read access, and in which said data is stored. Preferably, the data may be provided by a user of the orchestration node through a user interface such as a web-interface, or through other means. In an embodiment according to which the orchestrating node is associated with a user requiring the completion of a task, the data reflects for example personal information of the user, relating to her/his identity and her/his preferences for completing the task at hand. The memory element is advantageously structured, for example as a database, so as to associated portions of the user data with specific sub-tasks. The portion of data that is associated with a sub-task is the only portion of data that is necessary to complete the sub-task. The information allowing to provide this association may either be provided or pre-recorded by the user of the orchestration node and/or by constraints imposed by the candidate nodes. Indeed, the memory element also holds pre-provided information describing a set of available candidate nodes for completing each of said sub-tasks. The set or list may by dynamically updated via the communication network, for by the candidate nodes themselves.

At step a) of the method a node for completing a set of sub-tasks, is chosen by the orchestration node among a set of available candidate nodes. At the subsequent step b) the selected node is instructed to complete said set of sub-tasks and from the data held at the orchestrating node, only the portion of data that is required to complete said sub-task is transmitted to the selected node. As indicated by the dotted link in figure 1, the method steps are preferably repeated for each sub-task.

In order to perform the selection of a particular node among the set of available candidate nodes for a given sub-task or set of sub-tasks, further steps may be undertaken by the orchestration node in accordance with another preferred embodiment. For example, a probing request may be transmitted using a data communication channel to the candidate nodes. The probing request may comprise a service availability request, or it may comprise a portion of the data required to complete the subtask. The replies from the candidate nodes are then graded (e.g., highest availability, best quality of service at a given time, ...) in accordance with a grading metric that is user- and/or applicationdependent. A selection criterion may also be based on the requirement for data storage (or not) at the candidate node, or on the level of encryption on the communication channel that will be used to transmit the requisite data to the candidate node, once it would be selected for the completion of the sub-task. Another selection criterion may include the geographic position of a network node. A subtask may for example be required to take place within a pre-determined geographical area, or in a specific location. Only network nodes having a physical location, or being capable of moving to a location, within the pre-determined will then be eligible for being selected for the completion of the sub-task. The geographic location of a network node, and its earlier performance, may provide an indication of trustworthiness in the network node. For example, a node that is located within the premises of a bank has a higher trustworthiness for the sub-task of executing a banking order, than a mobile node whose position evolves on a public street.

Once a node has been selected for completing a sub-task and once the corresponding portion of data required for the completion of the sub-task has been received by said node, it preferably notifies the orchestrating node as to the state of the completion of the sub-task it has been entrusted with. The state of completion may comprise intermediary states of completion, and in any case, it comprises information as to the failure to complete or as to the successful completion of the sub-task. If the sub-task can be broken down into distinct actions, the state of completion may indicate which action or actions have been completed at a given time. The notification may be made by transmitting corresponding acknowledgement data directly to back to the orchestration node, or by recording the notification data on a blockchain to which the orchestration node and other nodes have access.

In accordance with a preferred embodiment, the transmission of data at step b) is performed gradually/progressively as the completion of the sub-tasks progresses, and as the completion of predetermined actions of the sub-task is acknowledged. For example, the data required to complete action X of the sub-task is only transmitted once the selected node notifies the orchestration node that the preceding action X-1 of the same sub-task has been successfully completed. This allows to further control the release of the data only if and when it becomes necessary or useful to do so. In case a particular action or the entire sub-task cannot be completed successfully by the selected node, the orchestration node either instructs a different node to complete the sub-task entirely, or to pickup completion of the task from the point of failure.

Figure 2 provides an illustration of a preferred embodiment of the invention, which is useful for implementing the method that has been described. A common task T needs to be completed in a distributed way by nodes N1, N2, ... in a communication network. The completion of the common task 2 relies on privacy sensitive data 140 that is associated with a user. The data is held in a memory element to which an orchestrating node 100 has access. The orchestrating node further comprises a data processor 102 and data transmission means 104 for communicating data to any of the network nodes N1, N2.... The common task T is subdivided into a set of sub-tasks T1, T2, ... and each of the sub-tasks is associated with a subset of the privacy sensitive data 140. The subset of data required for the completion of sub-task T1 is labelled 140(T1), and so on. Once the orchestrating node 100 has selected, using an appropriately programmed processor 102, a node for completing a set of the sub-tasks from the set of available candidate nodes 110, the chosen node is instructed to complete the sub-tasks T1, T2, and only the corresponding subsets of data 140(T1), 140(T2) is transmitted to the selected node. The full privacy sensitive data is not transmitted to a single node, so that it can not be intercepted by an eavesdropper monitoring a single link from the orchestration node to any of the candidate nodes.

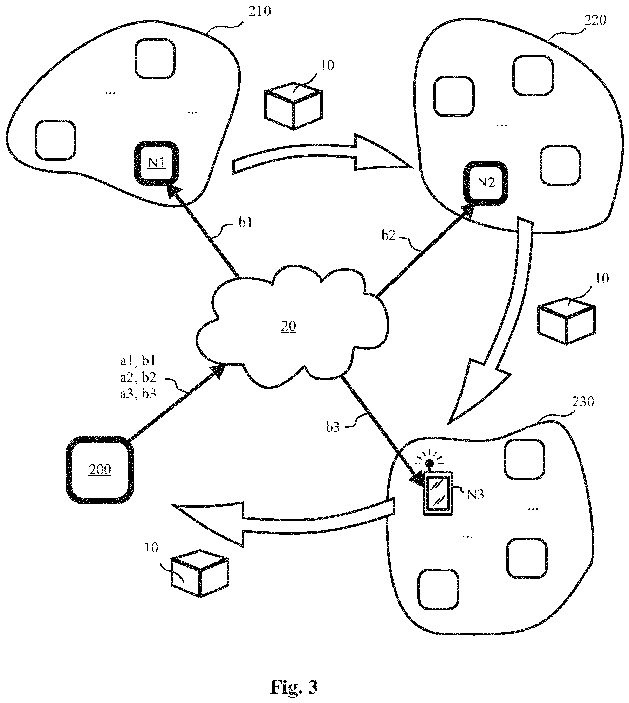

Figure 3 helps illustrating an application scenario of a preferred embodiment of the method according to aspects of the invention in the field of logistics. The method provides orchestration for the distributed completion of a data-distribution task in a communication network 20. A plurality of nodes 210, 220, 230 that are connected through the network to the orchestrating node 200, contribute to the completion of said task by completing a set of sub-tasks. The set of sub-tasks may comprise a single sub-task or a plurality of sub-tasks. The completion of each sub-task requires data initially held by the orchestration node 200. The data is preferably privacy sensitive data comprising information about a packet addressee's address, availability at the address, and the like.

The orchestration node 200 comprises a data processor programmed to implement selection means for selecting a node for the completion of a sub-task among a set of candidate nodes. It further comprises a memory element to which the data processor has read access, and in which said data is stored. The memory element also holds pre-provided information describing a set of available candidate nodes 210, 220, 230 for completing each of said sub-tasks. The set or list may by dynamically updated via the communication network, for by the candidate nodes themselves.

In the example of figure 3, three sub-tasks are required to be completed drive a parcel 10 from an origin to a destination. It is supposed that the orchestration node 200 is controlled by a user who orders the parcel 10 from via node N1 in the communication network. The node N1 is selected in accordance with step a) of the method, noted as a1, from a set of candidate nodes 210. At the subsequent step b1 the selected node N1 is instructed to complete a set of sub-tasks and only the portion of data that is required to complete said sub-task is transmitted to the selected node. This includes for example billing information and the address of a common parcel delivery station in the home town of the user. The exact delivery information (e.g. personal address, delivery time, ...) is withheld, as it is not required by node N1 for dispatching the parcel 10, which may be originally located in a different country as the address of destination, to the country or town of destination

Once the parcel 10 has been successfully delivered at the common parcel delivery station in the town of the home user, a corresponding notification of completion of the entrusted sub-task is notified to the orchestration node 200 by node N1. The location of the parcel may be available to node N1 via a tag that may be registered at destination and the registration of which may be notified to node N1. Such tags may comprise an RFID tag or an active IoT compliant tag, for example. The orchestration node 200 uses steps a2, b2 (instances of a) and b)) to select a node for delivering the parcel from the common delivery station to the destination address. The selection criteria are provided by preferences held by orchestration node, as the data required includes further sensitive privacy related data, such as for example a street address for the delivery of the parcel. Further selection criteria may be prior experienced quality of service, a degree of urgency to receive the parcel, costs, or others. Among a set of candidate nodes 220, node N2 is finally selected in step b2, and the corresponding portion of data b2 is securely transmitted to node N2. Note that the information b1 that was initially transmitted to node N1 is not copied to N2, and that the information b2 that is transmitted to node N2 is not copied to N1.

The choice of node N2 for the delivery sub-tasks implicitly limits the set of candidate nodes 230 for the next sub-tasks, which is the doorstep delivery sub-task: a particular delivery agent carrying a mobile node such as a smartphone needs to be selected by the orchestration node 200. The set of candidate nodes 230 must be under mandate of the delivery service provider selected as node N2. The orchestration node 200 uses steps a3, b3 (instances of a) and b)) to select a node for the last hop delivery. The selection criteria are provided by preferences held by orchestration node, as the data required includes further sensitive privacy related data, such as for example a presence time at the destination address, a last-minute change in the destination address, or the like. Further selection criteria may be prior experienced quality of service, personal knowledge of the delivery agent to the user of the orchestrating node, or others. Among a set of candidate nodes 230, node N3 is finally selected in step b3, and the corresponding portion of data b3 is securely transmitted to node N3. Note that the information b1 that was initially transmitted to node N1 is not copied to N3, and that the information b3 that is transmitted to node N3 is not copied to N1 nor N2. Preferably, as the node mobile node's N3 geographical location, which may be notified to the orchestration node 200 via GPS coordinates, approaches the location of the destination address, the data required to complete the delivery may be progressively refined by the orchestration node 200. Similarly, node N3 may transmit an estimated actual delivery time to orchestration node 200, upon which the latter may confirm or cancel the delivery. The data required to complete the sub-task at hand is thus progressively released to node N1 as the state of completion of the sub-task or of predetermined actions is notified to the orchestration node 200. For example, the destination address may be changed to a neighbour's address in case of last-minute absence of a person at the original address of delivery. In an alternative of this scenario, node N3 may be forced to give up completion of the task, due to a traffic jam or an accident. Unsuccessful completion of the corresponding sub-task is then notified to the orchestrating node, which selects a (non-illustrated) alternative node N3'. In order to complete the task, the set of sub-task will be amended by the orchestrating node, as the user associated with node N3' will first have to move to the vicinity of N3 to retrieve the packet, and only then will the details of the destination data be release to node N3'.

In a logistics scenario, other sub-tasks may for example arise at other nodes. This may for example include: wait for other parcels to arrive at a given node to consolidate delivery, re-package the goods for final delivery, split a parcel delivered to an intermediate node and forward items contained therein to different destinations, or others.

The example of figure 4 is by no means limiting of the invention. The method may for example be applied to a scenario according to which a plurality of IoT connected devices or smart devices are required to perform a distributed task. For example, an orchestrating node may hold personal agenda data of an individual. The individual may carry a host of connected devices, each being a network node. The distributed task may be: set up the technical requirements to hold a meeting at 10AM. In a first step, the orchestrating node selects one of the individuals connected devices for the delivery of a meeting invitation via a communication network. The device may for example be chosen as being the device that has been most actively used in the pat ten minutes, as this raises the probability of quick notification to the individual. Only once all participants have confirmed their attendance (this marks the sending of a notification indicating that the corresponding sub-task has been completed), the orchestrating node will transmit the number of attendees to a reservation node, in order to book an appropriately sized meeting room. Only as the participant's connected device's locations are detected as being in close vicinity of the booked meeting room, the orchestrating node will contact the network node in charge of switching on the lighting in the room, so as to avoid a waste of energy consumption.

The release of data in accordance with embodiments of the present invention is preferably entirely transparent to a user of the method once completion of a task has been ordered by the user. All initial constraints and/or user preferences are pre-recorded in a memory element of the orchestrating nodes, which selects the nodes and release data to them accordingly as the task progresses. If required, the constraints and/or user preferences may be updated during completion of the tasks, which may then lead the orchestrating node to update the schedule of sub-tasks and the nodes assigned to these. At all steps of the method, the orchestrating node may preferably automatically update selection criteria for the sub-tasks that have been performed, so that when a similar sub-task is required in a future instance, the selection criteria will be up to date. Such an update may for example comprise a grading of the candidate nodes with respect to observed quality of service.

The following embodiment describes yet another use case to illustrate the method steps in accordance with aspects of the invention. The contemplated scenario implies an orchestration node that issues as series of requests (probing requests) to sets of candidate nodes. The task at hand is considered to be the distribution of data, initially held by the orchestrating node, to network nodes that are associated with service providers within a logistics chain. The following algorithm may be used. It should be emphasised that the selection / data transmission process is dynamic and ongoing until the entire task, including all of its sub-tasks and their respective actions, have been completed. For example, at any stage, a selected network node may stop completing the assigned sub-task and a new node may have to be selected.

### Algorithm:

1. For some request (probing request):
   a. a subset (0 or more) of service providers (candidate node) that could respond to the request is defined (i.e. frame of the request)
   b. optionally, any kind of method/info that allows to locate the good to be delivered is given with more or less precision: ; (the probing request comprises part of the data required to complete the task)
   c. optionally, preferences rules (generic and/or specific) are given with more or less precision (some preferences can be mandatory)
   d. when a, b, c are empty, then this any available candidate node may be used.
2. For some service offer (probing reply) :
   a. Any kind of method/info that allows to identify the offer
   b. Optionally, any kind of method/info that allows to identify the request that is responded to (no id when proposing offers although no request has been made).
   c. Optionally, before the service performance (completion of the sub-task), disclose information about an expected assessment about the (future) service performance/quality (profile of expected assessment, i.e. time-varying and/or depending on other factors)
      i. Can be just a global level for the complete service, or a level for each preferences, or explanations or structured argument of how the service will be performed, or a probability distribution, etc.
   d. Optionally, during (or even after for collecting statistics) the service performance (i.e. during the completion of the sub-task), disclose to the orchestration node information such as facts about its performance/quality and, possibly, information such as re-assessment of its expected performance/quality (see previous sub-item).
3. Some ways to assess and compare the info disclosed (example grading metrics or methods )
   a. Can be defined with any simple partial order (or directed acyclic graph - DAG) or total order defined by rules (or decision trees, or formal ontologies with inferences, or clusterisation, learning, statistics, etc), or more complex systems can be used.
4. Some ways to assess and compare the trust (or confidence level, or probability distrib., etc.) in the (future) service (sub-task) performance
   a. Can be defined using similar techniques as for info disclosed (including probability distributions, e.g. small standard deviation => high trust, high standard deviation => low trust, ...)
5. Some ways to take a decision using the balance between the assessment of info disclosed and the assessment of trust and selecting the info that will be shared in the next cycle
   a. Can be defined using similar techniques as for info disclosed
   b. The decision can be
      i. During selection process: decide what data will be shared in the next cycle (in order to continue the information exchange in the next cycle);
      ii. During selection process: stop the data exchange;
      iii. Decide to select the node for the performance of the sub-task at hand, and decide what info will be transmitted in the next cycle when the service (subtask) performance starts
      iv. During the service performance: decide what info will be shared in the next cycle (in order to continue the information exchange in the next cycle);
      v. During the service performance: stop service performance with the previously selected node.
6. Go to item 1.

It should be noted that features described for a specific embodiment described herein may be combined with the features of other embodiments unless the contrary is explicitly mentioned. Based on the description and on the figures that have been provided, a person with ordinary skills in the art will be enabled to develop a computer program for implementing the described methods without undue burden and without requiring any additional inventiveness.

It should be understood that the detailed description of specific preferred embodiments is given by way of illustration only, since various changes and modifications within the scope of the invention will be apparent to the person skilled in the art. The scope of protection is defined by the following set of claims.

## Claims

1. A method for orchestrating the distributed completion of a common task (T) in a communication network, wherein the completion of said common task (T) relies on privacy sensitive data of a user (140), wherein a plurality of nodes (N1, N2, ...) in said network contribute to the completion of said common task by completing a set of sub-tasks (T1, T2, ...) thereof, and wherein the completion of each sub-task requires a subset (140(T1), 140(T2), ...) of the privacy sensitive data (140) initially held by an orchestration node (100, 200), the method comprising the following steps for each sub-task:
a) at the orchestration node (100, 200), using selection means (102), selecting a node for completing a set of sub-tasks (T2, T2, ...), from a set of candidate nodes (110, 210);
b) using data transmission means (104), instructing the selected node to complete said set of sub-tasks (T1, T2, ...) and transmitting only the subset of data (140(T1), 140(T2), ...) required to complete said sub-task to the selected node.

2. The method according to claim 1, wherein the selection step a) further comprises the steps of:
- transmitting a probing request to at least part of said candidate nodes (110, 210) using data transmission means;
- receiving a probing reply from said candidate nodes (110, 210) at the orchestration node (100, 200);
- using data processing means, grading the candidate nodes based on their probing replies using a predetermined grading metric, and
- selecting the candidate node having transmitted the probing reply that achieves the highest grade for completing said sub-task (T1, T2, ...).

3. The method according to claim 2, wherein said probing request comprises part of the data required to complete said sub-task.

4. The method according to any of claims 2 or 3, wherein said grading metric comprises any of a metric for grading the responsiveness, the availability or the trustworthiness of said candidate nodes, or any combination thereof.

5. The method according to any of claims 2 to 4, wherein the completion of a sub-task is required to take place in a predetermined location, and wherein the grading metric comprises an indication of the proximity between said predetermined location and the location of a candidate node.

6. The method according to any of claims 1 to 5, wherein the completion of a second subtask depends on the completion of a first subtask, and wherein the set of candidate nodes or completing the second subtask depends on the node that was selected to complete the first subtask.

7. The method according to any of claims 1 to 6, wherein the completion of a subtask is notified to the orchestrating node by the selected node.

8. The method according to any of claims 1 to 7, wherein the set of sub-tasks required for the completion of said tasks changes as the completion of the task proceeds.

9. The method according to any of claims 1 to 8, wherein said task comprises sub-tasks related to the delivery of a physical packet from a source address to a destination address, and wherein said candidate nodes are associated with logistics service providers.

10. The method according to any claim 9, wherein the data held by an orchestration node comprises the packet's destination address, opening hours at the destination address, a preferred delivery time, or any other personal information related to the completion of the task.

11. The method according to any of claims 1 to 10, wherein steps a) and b) are repeated until all sub-tasks of the task have been completed.

12. A device for orchestrating the distributed completion of a common task in a communication network, wherein the completion of said common task relies on privacy sensitive data of a user, wherein a plurality of nodes in said network contribute to the completion of said common task by completing a set of sub-tasks thereof, and wherein the completion of each sub-task requires a subset of the privacy sensitive data initially held in a memory element of the device, the device comprising data processing means and data transmission means, wherein the data processing means are configured to:
- select a node for completing a set of sub-tasks, from a set of candidate nodes;
- transmit instructions to the selected node to complete said set of sub-tasks and transmit only the subset of data required to complete said sub-task to the selected node.

13. The device according to claim 12, wherein the data processing means are further configured for performing the method in accordance with any of claims 2 to 11.

14. A computer program comprising computer readable code means, which, when run on a computer, causes the computer to carry out the method in accordance with any of claims 1 to 11.

15. A computer program product comprising a computer-readable medium on which the computer program according to claim 14 is stored.

## Patentansprüche

1. Verfahren zum Orchestrieren des verteilten Erledigens einer gemeinsamen Aufgabe (T) in einem Kommunikationsnetz, wobei das Erledigen der gemeinsamen Aufgabe (T) auf datenschutzrelevanten Daten eines Benutzers (140) beruht, wobei mehrere Knoten (N1 , N2, ...) in dem Netzwerk zum Erledigen der gemeinsamen Aufgabe beitragen, indem sie einen Satz von Teilaufgaben (T1, T2, ...) davon erledigen, und wobei das Erledigen jeder Teilaufgabe eine Teilmenge (140(T1), 140(T2), ...) der datenschutzrelevanten Daten (140) erfordert, die anfänglich von einem Orchestrierungsknoten (100, 200) gehalten werden, wobei das Verfahren die folgenden Schritte für jede Teilaufgabe umfasst:
a) am Orchestrierungsknoten (100, 200) unter Verwendung von Auswahlmitteln (102), Auswählen eines Knotens zum Erledigen eines Satzes von Teilaufgaben (T2, T2, ...) aus einem Satz von Kandidatenknoten (110, 210 );
b) unter Verwendung von Datenübertragungsmitteln (104), Anweisen des ausgewählten Knotens, den Satz von Teilaufgaben (T1, T2, ...) zu erledigen, und Übertragen an den ausgewählten Knoten nur des Teilsatzes von Daten (140(T1), 140(T2), ...), die erforderlich sind um die Teilaufgabe zu erledigen.

2. Verfahren nach Anspruch 1, wobei der Auswahlschritt a) ferner die folgenden Schritte umfasst:
- Senden einer Sondierungsanforderung an mindestens einen Teil der Kandidatenknoten (110, 210) unter Verwendung von Datenübertragungsmitteln;
- Empfangen einer Sondierungsantwort von den Kandidatenknoten (110, 210) am Orchestrierungsknoten (100, 200);
- unter Verwendung von Datenverarbeitungsmitteln Einstufung der Kandidatenknoten basierend auf ihren Sondierungsantworten unter Verwendung einer vorbestimmten Einstufungsmetrik, und
- Auswählen des Kandidatenknotens, der die Sondierungsantwort gesendet hat, die die höchste Einstufung zum Abschließen der Teilaufgabe (T1, T2, ...) erreicht.

3. Verfahren nach Anspruch 2, wobei die Sondierungsanforderung einen Teil der Daten umfasst, die erforderlich sind, um die Teilaufgabe abzuschließen.

4. Verfahren nach einem der Ansprüche 2 oder 3, wobei die Einstufungsmetrik eine beliebige Metrik zum Einstufen der Reaktionsfähigkeit, der Verfügbarkeit oder der Vertrauenswürdigkeit der Kandidatenknoten oder eine beliebige Kombination davon umfasst.

5. Verfahren nach einem der Ansprüche 2 bis 4, wobei das Erledigen einer Teilaufgabe an einem vorbestimmten Ort stattfinden muss, und wobei die Einstufungsmetrik eine Angabe der Nähe zwischen dem vorbestimmten Ort und dem Ort von einem Kandidatenknoten umfasst.

6. Verfahren nach einem der Ansprüche 1 bis 5, wobei das Erledigen einer zweiten Teilaufgabe vom Erledigen einer ersten Teilaufgabe abhängt, und wobei der Satz von Kandidatenknoten oder das Erledigen der zweiten Teilaufgabe von dem Knoten abhängt, der zum Erledigen der ersten Teilaufgabe ausgewählt wurde.

7. Verfahren nach einem der Ansprüche 1 bis 6, wobei das Erledigen einer Teilaufgabe dem Orchestrierungsknoten durch den ausgewählten Knoten mitgeteilt wird.

8. Verfahren nach einem der Ansprüche 1 bis 7, wobei sich der Satz von Teilaufgaben, die für das Erledigen der Aufgaben erforderlich sind, mit fortschreitendem Erledigen der Aufgabe ändert.

9. Verfahren nach einem der Ansprüche 1 bis 8, wobei die Aufgabe Teilaufgaben umfasst, die sich auf die Zustellung eines physischen Pakets von einer Quelladresse zu einer Zieladresse beziehen, und wobei die Kandidatenknoten Logistikdienstanbietern zugeordnet sind.

10. Verfahren nach Anspruch 9, wobei die von einem Orchestrierungsknoten gehaltenen Daten die Zieladresse des Pakets, Öffnungszeiten an der Zieladresse, eine bevorzugte Lieferzeit oder andere persönliche Informationen in Bezug auf das Erledigen der Aufgabe umfassen.

11. Verfahren nach einem der Ansprüche 1 bis 10, wobei die Schritte a) und b) wiederholt werden, bis alle Teilaufgaben der Aufgabe erledigt sind.

12. Eine Vorrichtung zum Orchestrieren des verteilten Erledigens einer gemeinsamen Aufgabe in einem Kommunikationsnetzwerk, wobei das Erledigen der gemeinsamen Aufgabe auf datenschutzrelevanten Daten eines Benutzers beruht, wobei mehrere Knoten in dem Netzwerk zum Erledigen der gemeinsamen Aufgabe beitragen durch Erledigen eines Satzes von Teilaufgaben davon, und wobei das Erledigen jeder Teilaufgabe eine Teilmenge der datenschutzrelevanten Daten erfordert, die anfänglich in einem Speicherelement der Vorrichtung gehalten werden, wobei die Vorrichtung Datenverarbeitungsmittel und Datenübertragungsmittel umfasst, wobei die Datenverarbeitungsmittel konfiguriert sind, zum:
- Auswählen eines Knotens zum Erledigen eines Satzes von Teilaufgaben aus einem Satz von Kandidatenknoten;
- Übertragen von Anweisungen an den ausgewählten Knoten, um den Satz von Teilaufgaben zu erledigen, wobei nur die Teilmenge von Daten an den ausgewählten Knoten übertragen wird, die erforderlich ist, um die Teilaufgabe zu erledigen.

13. Vorrichtung nach Anspruch 12, wobei die Datenverarbeitungsmittel ferner zur Durchführung des Verfahrens nach einem der Ansprüche 2 bis 11 konfiguriert sind.

14. Computerprogramm, das computerlesbare Codemittel umfasst, die, wenn sie auf einem Computer ausgeführt werden, den Computer veranlassen, das Verfahren nach einem der Ansprüche 1 bis 11 auszuführen.

15. Computerprogrammprodukt, umfassend ein computerlesbares Medium, auf dem das Computerprogramm nach Anspruch 14 gespeichert ist.

## Revendications

1. Procédé pour orchestrer l'accomplissement distribué d'une tâche commune (T) dans un réseau de communication, dans lequel l'accomplissement de ladite tâche commune (T) repose sur des données confidentielles d'un utilisateur (140), dans lequel une pluralité de nœuds (N1 , N2, ...) dans ledit réseau contribuent à l'accomplissement de ladite tâche commune en accomplissant un ensemble de sous-tâches (T1, T2, ...) de celle-ci, et dans lequel l'accomplissement de chaque sous-tâche nécessite un sous-ensemble ( 140(T1), 140(T2), ...) des données confidentielles (140) détenues initialement par un nœud d'orchestration (100, 200), le procédé comprenant les étapes suivantes pour chaque sous-tâche :
a) au niveau du nœud d'orchestration (100, 200), à l'aide de moyens de sélection (102), sélectionner un nœud pour accomplir un ensemble de sous-tâches (T2, T2, ...), parmi un ensemble de nœuds candidats (110, 210);
b) en utilisant des moyens de transmission de données (104), ordonner au nœud sélectionné d'accomplir ledit ensemble de sous-tâches (T1, T2, ...) et transmettre uniquement le sous-ensemble de données (140(T1), 140(T2), ...) requis pour accomplir ladite sous-tâche au nœud sélectionné.

2. Procédé selon la revendication 1, dans lequel l'étape de sélection a) comprend en outre les étapes de :
- transmettre une requête de sondage à au moins une partie desdits nœuds candidats (110, 210) à l'aide de moyens de transmission de données ;
- recevoir une réponse de sondage desdits nœuds candidats (110, 210) au niveau du nœud d'orchestration (100, 200) ;
- à l'aide de moyens de traitement de données, noter les nœuds candidats sur la base de leurs réponses de sondage à l'aide d'une métrique de notation prédéterminée, et
- sélectionner le nœud candidat ayant transmis la réponse de sondage qui obtient la note la plus élevée pour accomplir ladite sous-tâche (T1, T2, ...).

3. Procédé selon la revendication 2, dans lequel ladite requête de sondage comprend une partie des données requises pour terminer ladite sous-tâche.

4. Procédé selon l'une quelconque des revendications 2 ou 3, dans lequel ladite métrique de notation comprend l'une quelconque d'une métrique pour noter la réactivité, la disponibilité ou la fiabilité desdits nœuds candidats, ou une quelconque combinaison de celles-ci.

5. Procédé selon l'une quelconque des revendications 2 à 4, dans lequel l'accomplissement d'une sous-tâche doit avoir lieu dans un emplacement prédéterminé, et dans lequel la métrique de notation comprend une indication de la proximité entre ledit emplacement prédéterminé et l'emplacement d'un nœud candidat.

6. Procédé selon l'une quelconque des revendications 1 à 5, dans lequel l'accomplissement d'une deuxième sous-tâche dépend de l'accomplissement d'une première sous-tâche, et dans lequel l'ensemble de nœuds candidats ou l'accomplissement de la deuxième sous-tâche dépend du nœud qui a été sélectionné pour accomplir la première sous-tâche.

7. Procédé selon l'une quelconque des revendications 1 à 6, dans lequel l'accomplissement d'une sous-tâche est notifié au nœud d'orchestration par le nœud sélectionné.

8. Procédé selon l'une quelconque des revendications 1 à 7, dans lequel l'ensemble de sous-tâches requises pour l'accomplissement desdites tâches change au fur et à mesure de l'accomplissement de la tâche.

9. Procédé selon l'une quelconque des revendications 1 à 8, dans lequel ladite tâche comprend des sous-tâches liées à la livraison d'un paquet physique d'une adresse source à une adresse destination, et dans lequel lesdits nœuds candidats sont associés à des prestataires de services logistiques.

10. Procédé selon l'une quelconque des revendications 9, dans lequel les données détenues par un nœud d'orchestration comprennent l'adresse de destination du paquet, les heures d'ouverture à l'adresse de destination, une heure de livraison préférée ou toute autre information personnelle liée à l'accomplissement de la tâche.

11. Procédé selon l'une quelconque des revendications 1 à 10, dans lequel les étapes a) et b) sont répétées jusqu'à ce que toutes les sous-tâches de la tâche soient terminées.

12. Dispositif pour orchestrer l'accomplissement distribué d'une tâche commune dans un réseau de communication, dans lequel l'accomplissement de ladite tâche commune repose sur des données confidentielles d'un utilisateur, dans lequel une pluralité de nœuds dans ledit réseau contribuent à l'accomplissement de ladite tâche commune en accomplissant un ensemble de sous-tâches de celle-ci, et dans lequel l'accomplissement de chaque sous-tâche nécessite un sous-ensemble des données confidentielles initialement conservées dans un élément de mémoire du dispositif, le dispositif comprenant des moyens de traitement de données et des moyens de transmission de données, dans lequel le les moyens de traitement de données sont configurés pour :
- sélectionner un nœud pour accomplir un ensemble de sous-tâches, à partir d'un ensemble de nœuds candidats ;
- transmettre des instructions au nœud sélectionné pour accomplir ledit ensemble de sous-tâches et transmettre au nœud sélectionné uniquement le sous-ensemble de données requis pour accomplir ladite sous-tâche.

13. Dispositif selon la revendication 12, dans lequel les moyens de traitement de données sont en outre configurés pour mettre en œuvre le procédé selon l'une quelconque des revendications 2 à 11.

14. Programme informatique comprenant des moyens de code lisibles par ordinateur, qui, lorsqu'ils sont exécutés sur un ordinateur, amènent l'ordinateur à exécuter le procédé selon l'une quelconque des revendications 1 à 11.

15. Produit programme d'ordinateur comprenant un support lisible par ordinateur sur lequel est stocké le programme d'ordinateur selon la revendication 14.
